# EUROPEAN PATENT SPECIFICATION

(11) **EP 4 143 023 B1**
(45) Date of publication and mention of the grant of the patent: **15.05.2024**
(21) Application number: 21722305.6
(22) Date of filing: 30.04.2021
(51) Int. Cl.: B32B 5/18, B32B 7/12, B32B 27/06, B32B 27/08, B32B 27/18, B32B 27/20, B32B 27/28, B32B 27/30, B32B 27/32, B32B 27/36, B32B 27/40, B32B 3/12

(54) **THERMOPLASTIC FIRE-RETARDANT COMPOSITES**
THERMOPLASTISCHE FEUERHEMMENDE VERBUNDWERKSTOFFE
COMPOSITES THERMOPLASTIQUES IGNIFUGES

(30) Priority: 30.04.2020 EP 20172230
(43) Date of publication of application: 08.03.2023
(73) Proprietor: SHPP Global Technologies B.V., 4612 PX Bergen op Zoom (NL)
(72) Inventor: SOLENICKI, Goran, Bergen op Zoom 4612 PX (NL); WISMANS, Joris, Bergen op Zoom 4612 PX (NL); WIRTZ, Remco, Bergen op Zoom 4612 PX (NL); KULKARNI, Sandeep, Bergen op Zoom 4612 PX (NL)
(74) Representative: J A Kemp LLP
(86) International application number: PCT/IB2021/053602
(87) International publication number: WO 2021/220229

(56) References cited:
- WO-A1-2018/169851
- WO-A1-2018/215870

## Description

### A. Field of the Invention

The invention generally concerns fire-retardant composites. In particular, the fire-retardant composites are capable of meeting the fire requirements for vehicles (*e.g*., bus, rail, train).

### B. Description of Related Art

Composite laminates can be used to form structures having advantageous structural characteristics, such as high strength, high stiffness, and/or relatively low weight when compared to similar structures formed from conventional materials (*e.g*., balsa wood sandwich structures). As a result, composite laminates are used in a variety of applications across a wide range of industries, including the automotive, aerospace, rail transportation, and consumer electronics industries.

In many mass transportation applications (*e.g*., a train, a tram, a subway, a light rail, a monorail, an aircraft, a helicopter, a bus, a trolley, a ferry, a cable car, and the like.), it is desirable for a structural component or composite to demonstrate fire resistance by meeting various specifications for fire, smoke, toxicity, and performance. Many countries have various standards for fire resistant materials used in the transportation industry, thus making it difficult to meet all of the standards with a single composite material. This can result in manufactures having to produce different materials for different regions, which can be inefficient from an economic as well as a manufacturing perspective. Examples of these standards include ECE Regulation No. 118 Annex 7 (2005) + Rev. 2-amendment 1 (2018) and Annex 8 (2005) + Rev. 2-amendment 1(2018), European Union ISO-9239-1:2010 (en), European Union EN-45545-2, American Section for the International Association for Testing Method (ASTM) E662, ASTM E162, Chinese standard TB/T, or the International Union of Railways standard UIC 564.

Various attempts to provide fire resistant light-weight structural components have included using polymeric materials that include halogen plastic materials (*e.g*., fluorocarbon polymeric material, polyvinyl chloride, or the like). However, these materials suffer in that they can produce toxic, harmful, and undesirable halogen-containing gases and/or may not meet industry standards. Composites made from non-halogen containing polymers, while providing numerous advantages, can suffer in that many are flammable and/or may not provide the mechanical and/or physical properties necessary for the application (*e.g*., floor panels). By way of example, International Patent Application Publication No. WO 2018/215870 to Goran *et al.* describes a fire-retardant laminate used to make fire-retardant composites. These composites pass fire-retardant tests for interior panels. In another example, EP Patent Application No. EP 1055513 to Green et al. describes prepeg panels impregnated with two layers of different fire retardant materials. These panels suffer in that they use thermosetting polymers which tend to be brittle and are more labor intensive to produce.

In addition to better fire-retardant properties, various attempts to reduce a vehicle's energy consumption or increase its range, lighter vehicles (*e.g*. busses, trams and trains, and the like) are being investigated. For example, a vehicle's weight can be reduced by simplifying the support structures onto which a wall or floor is mounted. By simplifying the structure, typically the unsupported length increases, which in turn requires stiffer walls or floors to deal with the same loads of the incumbent structure. Conventional methods to reduce weight include the use of balsa wood as a core material for making thermoplastic composites. Disadvantages of using balsa wood is that it is prone to moisture absorption (leading to weight increase and rotting of the panel).

While various attempts have been made to produce thermoplastic fire-retardant composites, these attempts have failed to meet the transportation industry's fire standards and structural standards for mass transit vehicles.

WO 2018/169851 A1 discusses multi-layer assemblies comprising a reinforced thermoplastic surface layer and core layer. Vehicle load floors, wall panels, flooring panels including the multi-layer assembly are also described.

### SUMMARY OF THE INVENTION

A discovery has been made that addresses some of the problems associated with fire-retardant composites used in the mass transportation (*e.g*., rail and bus transportation) industry. The discovery includes a thermoplastic fire-retardant composite. The composite includes a thermoplastic core, a first fiber reinforced laminate, and a fire-retardant outer film layer. The fire-retardant composite can be in a sandwich form and can include a second laminate or a support structure positioned on the opposite surface of the core than the first fiber reinforced laminate. It was found that such a structure can meet rail and bus transportation industry standards (*e.g*., fire testing of materials and components for bus and train standards, which includes passing ECE Regulation 118, Annex 7 and Annex 8, EN45545-2, have a CHF (kW/m²) 6 to 8, and HL3 level with CHF(kW/m²) higher than 8 in flame spread testing ISO9239-1, and structural requirements). Further, the materials used in this structure provide the advantages of (1) being light-weight and (2) can avoid the off-gassing issues seen with many of the currently available composites. Additionally, the manufacturing processing steps used to make the composites of the present invention can be economically efficient and scalable for commercial production.

The present invention provides a fire-retardant composite comprising (a) a porous core material comprising a first thermoplastic polymer comprising polyethylene terephthalate, a fire-retardant polypropylene, a polycarbonate, a polyimide, a polyethersulfone, a polyurethane, or a poly(phenylene ether)/styrene blend, or a blend thereof (b) a first reinforced laminate disposed on a first side of the porous core the first reinforced laminate comprising at least one layer, the layer comprising, based on the total weight of the layer: (i) 50 wt.% to 80 wt.% fibers, (ii) 20 wt.% to 50 wt.% of a second thermoplastic polymer comprising polypropylene, polyethylene, a polycarbonate, a polycarbonate copolymer, a polyethylene terephthalate, a polyethersulfone, a poly(phenylene) ether, poly(p-phenyl)oxide, or a polyimide, or a blend thereof (iii) 0 wt.% to 30 wt.% of a first fire-retardant composition; and (c) a first fire-retardant film disposed on the outer surface of the first reinforced laminate, wherein the first fire-retardant film comprises, based on the total weight of first fire-retardant film: (i) 59 wt. % to 95 wt. % of a third thermoplastic polymer compatible with the second thermoplastic polymer, (ii) 5 to 40 wt.%, of a second fire-retardant composition, and (iii) 0 to 1 wt.% additives. The fire-retardant composite can also include a second laminate or a support structure (*e.g*., metal containing material such as a metal alloy, or metalloid material, preferably an aluminum material) disposed on a side opposite the first side of the core. In some embodiments, when a second laminate is used, a second fire-retardant film can be disposed on the opposite outer surface of the second first reinforced laminate. The first fire-retardant film can be absent of fiber reinforcement material or include fiber reinforcement material. The fire-retardant film(s) can have a total thickness less than the total thickness of the laminate. The second fire-retardant film can be the same or different than the first fire-retardant film. The second laminate can be the same or different than the first laminate. The porous core includes a first thermoplastic polymer comprising a polyethylene terephthalate, a fire-retardant polypropylene, a polycarbonate, a polyimide, a polyethersulfone, a polyurethane, or a poly(phenylene ether)/styrene blend, or a blend thereof. The first reinforced laminate comprises at least one layer. The reinforced laminate includes at least one layer, the layer includes, based on the total weight of the layer 20 wt.% to 50 wt.% of a second thermoplastic polymer comprising polypropylene, polyethylene, a polycarbonate, a polycarbonate copolymer, a polyethylene terephthalate, a polyethersulfone, a poly(phenylene) ether, poly(p-phenyl)oxide, or a polyimide, or a blend thereof; 0 wt.% to 30 wt.% of a fire-retardant composition; and 50 wt.% to 80 wt.% fibers. The first fire-retardant film is disposed on the outer surface of the first reinforced laminate. The second thermoplastic includes polypropylene, polyethylene, a polycarbonate, a polycarbonate copolymer, a polyethylene terephthalate, a polyethersulfone, a poly(phenylene) ether, a poly(p-phenyl)oxide, or a polyimide, or a blend thereof. The first fire-retardant film includes, based on the total weight of the film 59 wt.% to 95 wt.% of a third thermoplastic polymer compatible with the second thermoplastic material, 5 to 40 wt.% of a fire-retardant composition, and 0 wt.% to 1 wt.% additives. The third thermoplastic material is compatible with the second thermoplastic material. The fire-retardant film(s) (*e.g*., the first and/or the second fire-retardant films) can have a thickness of 0.05 mm to 5 mm, preferably 0.5 mm to 3 mm. The fire retardant composition can comprise an intumescent compound. The fire-retardant composition used in the laminates and the films of the present invention can include the same components, but the amounts of the components can vary. In some embodiments, the fire-retardant composition can include a metal oxide *(e.g.,* zinc oxide) and a nitrogen-phosphorous compound (*e.g*., melamine pyrophosphate, piperazine pyrophosphate, ammonium polyphosphate, and mixtures thereof). The composite thickness can be greater than 0.5 mm to 100 mm, preferably 5 mm to 80 mm, more preferably 10 mm to 50 mm. The second and/or third thermoplastic polymers can be polypropylene. In one instance, the core material is PET and the second and thermoplastic polymers are polypropylene and the fibers are glass fibers. In such a composition the layer in the first reinforced laminate can include 0.01 wt.% to 2 wt.% of a coupling agent. The fire-retardant composite can include an adherent layer (*e.g.*, a fire-retardant film or layer, or a non-fire-retardant layer) between the core and the laminate. The adherent layer/film can contact at least a portion of the surface of the porous core material and at least a portion of the surface of the laminate(s) and adhere the laminate(s) to the porous core. The adherent layer can include 0 wt.% to 40 wt.% or 0 wt. % to 30 wt. % of a third fire-retardant composition and 60 wt.% to 100 wt.% or 70 wt. % to 100 wt. % of ethylene vinyl acetate, polypropylene, polypropylene-polyethylene terephthalate blends, acrylics, nitriles, silicone rubbers, styrene-butadiene-styrene copolymers, styrene-ethylene/butylene-styrene copolymers, styrene-ethylene/propylene copolymers, styrene-isoprene-styrene copolymers, or a combination thereof. The adherent layer can be the same or different than the fire-retardant film used on the outer surface of the laminate(s). Fibers in the laminate can include glass fibers, carbon fibers, aramid fibers, ceramic fibers, basalt fibers, natural fibers (*e.g*., hemp, bamboo, flax, jute and cellulose), steel fibers, or combinations thereof. In some embodiments, the fibers are glass fibers, and the fibers can have an average diameter of 3 to 30 microns. In another instance, the fibers can be glass fibers, carbon fibers, or a combination thereof. In some instances, the second laminate is the same as the first laminate, the second fire-retardant film is the same as the first fire-retardant film, or both.

Other objects, features and advantages of the present invention will become apparent from the following figures, detailed description, and examples. It should be understood, however, that the figures, detailed description, and examples, while indicating specific embodiments of the invention, are given by way of illustration only.

### BRIEF DESCRIPTION OF THE DRAWINGS

Advantages of the present invention may become apparent to those skilled in the art with the benefit of the following detailed description and upon reference to the accompanying drawings.
FIG. 1A is an illustration of a cross-sectional view of a fire-retardant composite of the present invention having a sandwich-type structure that includes two thermoplastic laminate, a porous thermoplastic core, and a fire-retardant film.
FIG. 1B is an illustration of a cross-sectional view of a fire-retardant composite of the present invention having a sandwich-type structure that includes four layers, a porous thermoplastic core, and a fire-retardant film.
FIG. 1C is an illustration of a cross-sectional view of a fire-retardant composite of the present invention having a sandwich-type structure that includes six layers, a porous thermoplastic core, and a fire-retardant film.
FIG. 2 is an illustration of cross-sectional view of a fire-retardant composite of the present invention having a sandwich-type structure that includes four layers with at least one layer including a fire-retardant composition, a porous thermoplastic core, a fire-retardant film on the outer surface of the laminate, and two fire-retardant adherent layer between the laminate and porous core.
FIG. 3 is an illustration of cross-sectional view of a fire-retardant composite of the present invention having a sandwich-type structure that includes four non-fire retardant layers, a porous thermoplastic core, and two fire-retardant adherent layer between the laminate and porous core.
FIG. 4 is a flow chart of a method to make a sandwich-type composite of the present invention from two laminates, a porous thermoplastic core, and a fire-retardant film.
FIG. 5 is a flow chart of a method to make a sandwich-type composite of the present invention having two laminates, a porous thermoplastic core, and two fire-retardant films.

While the invention is susceptible to various modifications and alternative forms, specific embodiments thereof are shown by way of example in the drawings. The drawings may not be to scale.

### DETAILED DESCRIPTION OF THE INVENTION

Many thermoplastic components made for the mass transportation industry (*e.g*., vehicle industry) fail the fire testing requirements and structural requirements. By way of example, most components made from polypropylene containing polymeric materials fail these tests. A discovery has been found that addresses some the problems associated with conventional reinforced thermoplastic components. The discovery is premised on a fire-retardant thermoplastic composite that can include a laminate having a thermoplastic polymer (*e.g*., polypropylene) and fire-retardant composition and a porous *(e.g.,* honeycomb or foamed) thermoplastic core, and a fire. As exemplified in the Examples, the fire-retardant composite of the present invention can be compliant with transportation standards (*e.g*., ECE Regulation 118, Annex 7 and Annex 8, and flame spread test EN ISO 9239-1). As further exemplified in the Examples, composites having a fire-retardant laminate and fire-retardant adherent layer do not meet these standards. The aspects of the present invention are discussed in further detail in the following sections.

### A. Fire-retardant Composite

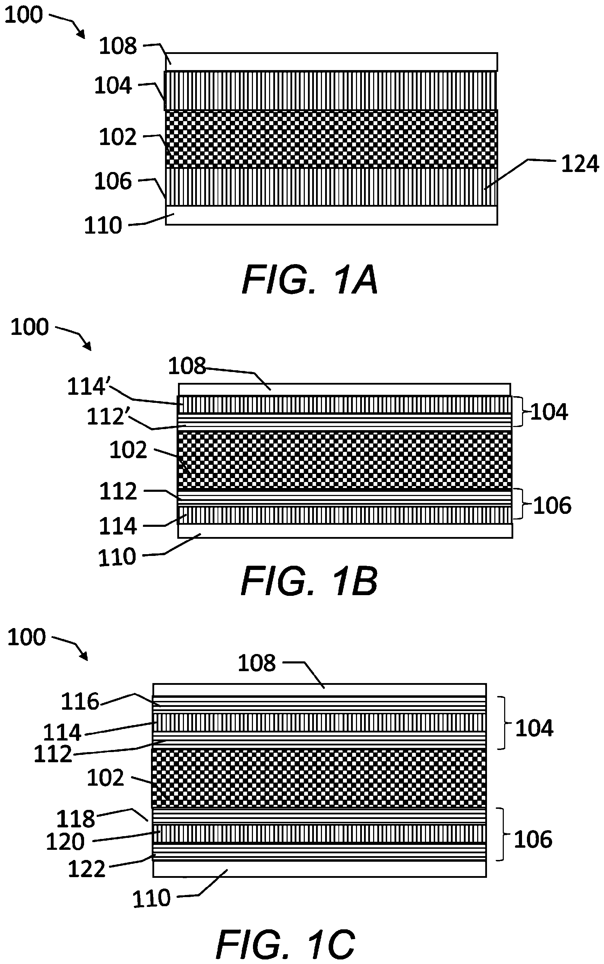

The fire-retardant composite of the present invention can have a sandwich-type structure having a thermoplastic core positioned between two thermoplastic laminates. FIGS. 1A-1C are cross-sectional illustrations of fire-retardant composite 100. Referring to FIG. 1A, composite 100 can have porous thermoplastic core 102, first laminate 104, and second laminate 106, and a fire-retardant films 108, 110. In some embodiments, second laminate 106 may be a support material. The support material can be a metal containing material, an alloy, a metalloid material, or a combination thereof. The support can be capable of adhering to the core either through use of an adherent layer and/or by using heat. An example of a support material is an aluminum panel. It should be understood that while a support is not shown, the second laminate can be support. While only one laminate is shown, it should be understood that multiple laminates can be used. First laminate 104 and second laminate 106 can be made of one layer or multiple layers (*e.g.,* 1, 2, 3, 4, 5, 6, 7, 8, 9, 10, 11, 11, 12, *etc*.). FIGS. 1B and 1C depict composite 100 with four layers (layers 112, 112', 114 and 114') and six layers (layer 112, 114, 116, 118, 120, and 122), respectively. One or all of the layers can include fibers 124 dispersed within polymeric matrix material 126 (*See,* FIG. 1A). It should be understood that the hatching in the layers of figures does not represent direction of the fibers unless indicated otherwise. The compositions of laminate 104 and 106 can be the same or different and is discussed in more detail in Section C below. In a preferred embodiment, laminate 104 and 106 can include different compositions, similar compositions, substantially the same, or the same composition. In one instance, laminate 104 and 106 are fire-retardant laminates. The compositions of fire-retardant films 108 and 110 can be the same or different and is discussed in more detail in Section C below. In a preferred embodiment, fire-retardant films 108 and 110 can have the same compositions or similar compositions. The thickness of each fire-retardant film 108, 110 is less than the thickness of each laminate 104, 106. More specifically, the fire-retardant film or fire-retardant adherent layer can have a thickness of 0.05 to 5 mm, 0.5 to 4 mm, 1 to 3 mm, or 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1, 1.5, 2, 2.5, 3, 3.5, 4, 4.5, or 5 mm, or any value or range there between in thickness. The fire-retardant film thickness can vary based on the laminate thickness as long as the film is thinner than the laminate. For example, the laminate can have a thickness of 0.5 mm and the fire-retardant film can have a thickness of less than 0.5 mm. A ratio of the thickness of laminate to fire-retardant film can be 1.1 to 100, 2 to 50, 5 to 40, 5 to 30 or 1.1, 1.5, 10, 15, 20, 25, 30, 35, 40, 45, 50, 55, 60, 65, 70, 75, 80, 85, 90, 95, 100, or any range or value there between.

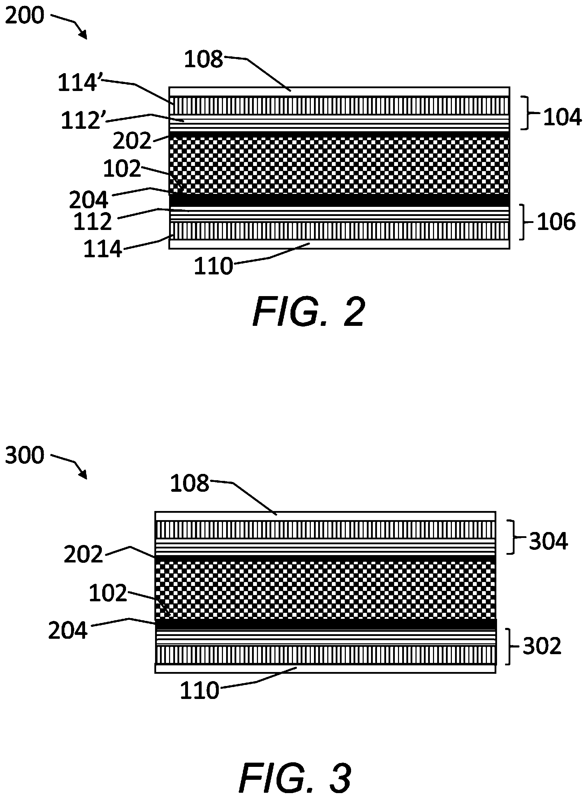

In some embodiments, composite 100 can include an adherent layer and/or a fire-retardant adherent layer. The adherent layer and/or fire-retardant adherent layer can be used to improve the adhesion between layers and/or laminates and the core. FIG. 2 depicts composite 200 that include adherent layers 202 and 204 between laminate 104, laminate 106 and core 102. Adherent layers 202 and 204 can be the same or different adherent composition. For example, adherent layer 202 can include a fire-retardant composition and adherent layer 204 does not include a fire-retardant composition. In some embodiments, only one adherent layer is used. By way of example, composite 200 can only include adherent layer 202 and not adherent layer 204 (not shown). Adherent layers 202 and 204 can include adherent (adhesive) compositions and other components. Examples of adherents include ethylene vinyl acetate, polypropylene, polypropylene-polyethylene terephthalate blends, acrylics, nitriles, silicone rubbers, styrene-butadiene-styrene copolymers, styrene-ethylene/butylene-styrene copolymers, styrene-ethylene/propylene copolymers, styrene-isoprene-styrene copolymers, a combination thereof, or blend thereof. In a preferred instance, ethylene vinyl acetate or polypropylene is used. In another embodiment, no adherent layer is used. In some embodiments, the adherent is mixed with other additives including antioxidants, heat stabilizers, flow modifiers, colorants, *etc.,* or any combinations thereof. Adherents and other additives are available from commercial chemical suppliers such as, for example, SigmaMillipore (U.S.A.), ExxonMobil Chemical (U.S.A.), LyondellBassell (U.S.A.). In some embodiments, adherent layers 202, 204 can be fire-retardant adherent layers. The fire-retardant adherent layer can include one or more of the adherents listed above and a fire-retardant composition. The fire retardant composition can be the same or different than the fire-retardant composition in a fire-retardant laminate and/or the fire-retardant film. Examples of fire-retardant materials are discussed in Section F Fire Retardant Compositions. In a preferred embodiment, the fire-retardant adherent layer has the same composition as the fire-retardant film (e.g., polypropylene and a fire-retardant composition).

In some embodiments, composite 300 can include a non-fire-retardant laminate, a core and at least one fire-retardant adherent layer between the laminate and core. The adherent layer can be used to improve the adhesion between layers and/or laminates and the core. FIG. 3 depicts composite 300 that include fire-retardant adherent layers 202 and 204 between non-fire-retardant laminate 302, non-fire-retardant laminate 304 and core 102. Fire-retardant films 108, 110 are on the outer surface of laminates 302 and 304. Adherent layers 202 and 204 can be the same or different adherent composition. In some embodiments, only one fire-retardant adherent layer is used. By way of example, composite 300 can only include adherent layer 302 and not adherent layer 304 (not shown).

The fire-retardant composites of the present invention can be dimensioned and shaped according to respective applications. The overall thickness of the composite can be up to and even exceeding several millimeters. More specifically, the composite can have a thickness of 1 to 100 mm, 0.4 to 50 mm, 0.6 to 25 mm, or 1, 5, 10, 15, 20, 25, 30, 35, 40, 45 or 50 mm or any value or range there between in thickness. The thickness of the composite can vary depending on the desired weight % of each laminate. The thickness of the composite can be obtained by controlling the thickness of the layers used to make the laminate. Composites 100 200, or 300 can be rectangular; however, other embodiments of the present laminates can be triangular, square, or otherwise polygonal (whether having sharp and/or rounded corners), circular, elliptical, or otherwise rounded, or can have an irregular shape. Some embodiments of the present composites can include one or more openings, notcheswhich can facilitate incorporation of the composite into a structure.

In some embodiments, the composite and/or laminates can be decorated. In use, a surface of the composite or laminates can be subjected to printing with ink. In an embodiment, an exposed surface of the composite (*e.g*., an exposed surface of the fire-retardant film) can be subsequently decorated, in particular printed with markings such as alphanumerics, graphics, symbols, indicia, logos, aesthetic designs, multicolored regions, and a combination that includes at least one of the foregoing. In some embodiments, each layer can be decorated. One of the exposed (or outer) surfaces of the composite can be subjected to common curing and/or surface modification processes. Examples of such processes can include heat-setting, texturing, calendaring, embossing, corona treatment, flame treatment, plasma treatment, and vacuum deposition.

In some embodiments, the composite can include a cap layer material. The cap layer can be a film laminate made from a different polymer and process than the composite laminates. By way of example, it can be an extruded film material, which is, for example, chemical resistant to cleaning agents. Film materials used can include polyvinylidene fluoride (PVDF), polyvinyl fluoride (PVF), poly(methylmethacrylate) (PMMA), multilayered combinations and blends thereof. These film materials can be applied by roller lamination or double belt press lamination equipment. Also aesthetic film materials can be used to produce, for example, a wood grain or metallic surface. The cap layer can be created by co-extrusion (single or multi-manifold). An anti-microbial surface can be created by co-extrusion of film materials with silver. The cap layer can be made by screen-printing an aesthetic or functional ink layer. In most instances, these cap layers will be thermoformable.

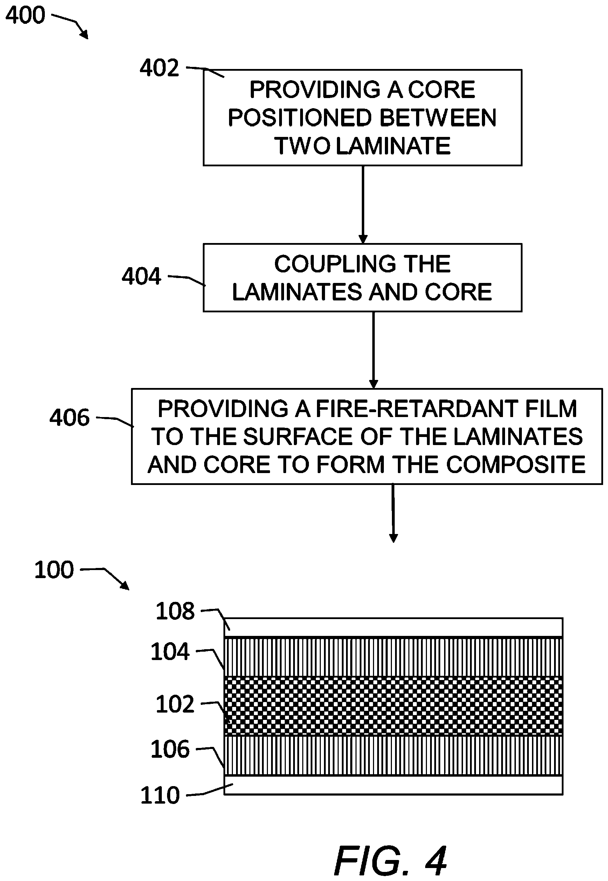

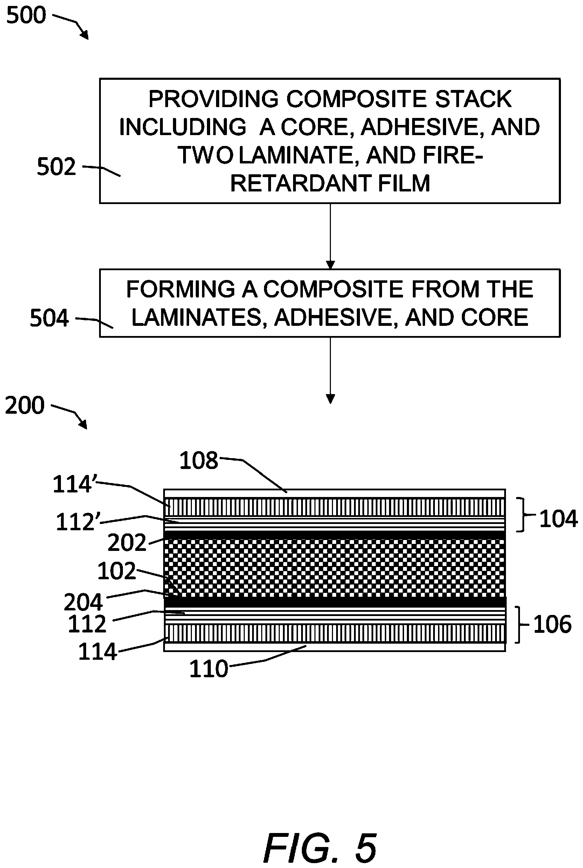

The fire-retardant composites (*e.g.*, composites 100, 200 and 300 in FIGS. 1-3) can be made using known panel consolidation techniques. By way of example, the fire-retardant composite can be made using continuous systems that include one or more machines capable of cutting, cooling, stacking and wrapping (for example, static heated presses, double belt presses). FIGS. 4 and 5 are flow charts of methods to prepare fire-retardant composites 100 (FIG. 4) and 200 (FIG. 5). In step 402 of method 400, laminates 104, 106 and porous thermoplastic core 102 can be obtained. The laminates can include at least 2 or 3, 4, 5, 6, 7, 8, 9, 10 or more layers having a thickness of about 0.1 to 10 mm, or 0.25 to 5 mm. The core density can be reduced to a desired density by patterning the core thermoplastic layer. Porous thermoplastic core 102 can be positioned between the two laminates. In step 404, the composite stack can be formed by heating and pressing the laminates and core together. By way of example the composite stack can enter a first zone of a double belt press at a pressure of 5 to 15 N/cm², or (0.5 to 1.5 MPa, or 0.5, 0.6, 0.7, 0.8, 0.9, 1, 1.1, 1.2, 1.3, 1.4, 1.5 MPa or any value or range there between) and then heated to a temperature of 140 to 250 °C, (*e.g*., about 145 °C to 220 °C). The pressed stack can enter a second zone, be pressed, and the heated to 140 to 250 °C, *(e.g.,* about 145 °C to 220 °C). The pressed stack can enter a third zone, be pressed and then heated at a temperature of 150 to 250 °C (*e.g.*, about 200 to 230 °C, or about 220 °C) to form a laminate 104/core 102/laminate 106 structure. Laminates 104 and 106 can fully encapsulate core 102 after heat pressing. The laminate 104/core 102/laminate 106 structure can be cooled to ambient temperature. In step 406, fire-retardant film 108 and/or fire-retardant film 110 can be provided to the cooled structure and pressed and heated at a temperature of 150 to 250 °C (*e.g.*, about 200 to 230 °C, or about 220 °C) to form the composite. The pressing and heating can be performed multiple times to attach the film to the composite. Step 406 can be performed together or prior to step 404.

In method 500, laminates 104, 106, core 102, and a fire-retardant adherent layer can be obtained in step 502. In some instance, an adhesive is used instead of a fire-retardant adherent layer. The core density can be reduced to a desired density by patterning the core thermoplastic layer. Core 102 can be positioned between the two laminates with adhesive being between at least one surface of the core and a laminate. Film resin can be provided to the surface of the laminate. The surface of core 102 can be treated with the fire-retardant adherent layer or and the adhesive or both prior to assembling the stack. In step 504, the composite stack can be formed by heating and pressing the laminates, fire-retardant adherent layer or adhesive or both, and core together. By way of example, the composite stack can enter a first zone of a double belt press at a pressure of 5 to 15 N/cm², or (0.5 to 1.5 MPa, or 0.5, 0.6, 0.7, 0.8, 0.9, 1, 1.1, 1.2, 1.3, 1.4, 1.5 MPa or any value or range there between) and then heated to a temperature of 140 to 250 °C, *(e.g.,* about 145 °C to 220 °C). The pressed stack can enter a second zone, be pressed, and the heated to 140 to 250 °C, *(e.g.,* about 145 °C to 220 °C). The pressed stack can enter a third zone, be pressed and then heated at a temperature of 140 to 250 °C, *(e.g.,* about 145 °C to 220 °C) to form the composite 200. Laminates 104 and 106 and fire-retardant films 108, 110 can fully encapsulate core 102 after heat pressing. Adhesive film (FR and non FR) and laminates can be supplied on rolls. The core can be supplied in plate shape and feed manually. The consolidation process can be started with introducing laminate and adhesive layer by unwrapping the rolls and introducing them into the double belt press. Upper laminate and adhesive layer and lower laminate and adhesive layer can be introduced at the same time into the press. After consolidation, the core (plates) can be feed in between the adhesive and the laminate. The layup of the laminate, adhesive, and core is done prior to feeding the materials into the double belt press. Once, the layup is performed (laminate, adhesive film, core, adhesive film and laminate, the material is pulled by press and then pressed in one step.

The composites of the present invention can be used in transportation components. Examples of transportation components can include floor panels, claddings, covers, and tray tables for train interiors. Examples of claddings include: interior vertical surfaces, such as side walls, front walls, end-walls, partitions, room dividers, flaps, boxes, hoods and louvres; interior doors and linings for internal and external doors; window insulations; kitchen interior surfaces; interior horizontal surfaces, such as ceiling paneling, flaps, boxes, hoods and louvres; luggage storage areas, such as overhead and vertical luggage racks, luggage containers and compartments; driver's desk applications, such as paneling and surfaces of driver's desk; interior surfaces of gangways, such as interior sides of gangway membranes (bellows) and interior linings; window frames (including sealants and gaskets); (folding) tables with downward facing surface; interior and exterior surface of air ducts, and devices for passenger information (such as information display screens).

While the compositions described herein are designed for use preferably in railway interiors, it is to be understood that the compositions are also useful in other interior components that are required to meet the fire retardant test standards for rail applications. By way of example, the components can be used for interior bus articles of manufacture such as floor panels, claddings, covers and tray tables as described above.

### B. Core Material

The porous thermoplastic core (*See,* for example core 102 in FIGS. 1A, 1B, 2 and 3) can have an open-cell foam structure, a closed-cell foam structure, a honeycomb structure, or combinations thereof. In some embodiments, the porous thermoplastic core has a honeycomb structure that is filled with foamed thermoplastic material. The density of the core can be greater than or substantially equal to any one of, or between any two of: 20, 25, 50, 75, 100, 125, 150, 175, 200, 225, 250, 275, 300, 325, 350, 357, and 400 Kgm⁻³. Polymers used for sandwich panel core 102 can be linear (non-crosslinked), partially crosslinked or fully crosslinked depending on the final application. Crosslinking of core material can be done during core manufacturing or be an additional processing operation. Core materials can include additional fillers and/or fire-retardant compositions. Fillers can include fiber or particles such as, for example, inorganic fiber-particles. The amount and composition of the filler can include halogenated materials as long as the materials are not detrimental to the overall performance of the composite.

Core materials include a polyethylene terephthalate (PET), a fire-retardant polypropylene (PP), a polycarbonate (PC), a polyimide, a polyethersulfone (PES), a polyurethane (PU), or a poly(phenylene ether)/styrene blend, or a blend thereof. "Polypropylene" as used herein includes polypropylene and co-polymers thereof. "Polycarbonate polymers" as used herein include polycarbonate polymers and co-polymers thereof and are described in more detail below. "Polyimides" as used herein include polyimides and polyetherimides. Thermoplastic cores can be produced or are available from various commercial sources. By way of example, a PET core can be obtained from commercial sources such as Armacell Benelux S.A. (Beligum) under the tradename of ArmaFORM^{®}, or from Diab Group (Sweden) under the tradename of Divinylcell P. In a preferred embodiment, the core is a PET foam. Fire-retardant polypropylene honeycomb cores can be obtained from EconCore N.V. (Belgium.) under the tradename ThermHex. Polyimide cores can be obtained from commercial suppliers such as DuPont^{™} (U.S.A.), Hexcel Corporation (U.S.A.).

### C. Laminates

One or multiple layers include a second thermoplastic polymer, an optional fire-retardant composition, fibers, and an optional coupling agent. In some embodiments, no fire-retardant composition is used. Thermoplastic polymers suitable for use in making the first or second laminate can include thermoplastic polymers that are the same or different from the thermoplastic polymers used for the core. The second thermoplastic polymers are a polypropylene, polyethylene, PET, a PC, a PC copolymer, a polyimide, a PES, a poly(phenylene ether), PPO, or a blend thereof. In a preferred embodiment, the layer includes polypropylene, more specifically polypropylene homopolymer. Polypropylene can be obtained from various commercial suppliers. Examples of commercial polypropylene include Achieve^{™} 6936G2 resin by ExxonMobil (U.S.A.), Braskem CP1220B by Songhan Plastic Technology Co., Ltd. (China), Moplen HP500V by LyondellBasell Industries Holding, B.V. (the Netherlands), PP FPC100 by SABIC^{®} (Saudi Arabia), and the like. In some embodiments, the polypropylene can be a high flow polypropylene, which has a melt flow rate of 210 to 240 or about 230 °C/2.16 Kg as determined by ISO 1133 at about 120 g/10 min). In some embodiments, a layer includes any range of any two of: 25 wt.%, 30 wt.%, 35 wt.%, 40 wt.%, 45 wt.%, or 50 wt.% of the second thermoplastic polymer, based on the total weight of the layer. The laminate layer(s) do not include thermoset polymers.

The total amount of fire-retardant composition in the laminate layer is 0 to 30 wt.%, preferably 5 to 20 wt.%, or between any two of: 0, 1, 2, 3, 4, 4.5, 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, 18.5, 19, 19.5, 20, 20.5, 21, 21.5, 22, 22.5, 23, 23.5, 24, 24.5, 25, 25.5, 26, 26.5, 27, 27.5, 28, 28.5, 29, 29.5, or 30 wt.%. Examples of fire-retardant compositions are described in Section F Fire Retardant Compositions of this specification. The thermoplastic polymer composition (e.g., second thermoplastic polymer) used to make the laminate layer includes 0 wt.% to 30 wt.%, preferably 10 wt.% to 25 wt.% or 15 wt.% to 20 wt.% or between any two of 5, 10, 15, 20, 25, and 30 wt.% of the fire-retardant composition, based on the total weight of the thermoplastic polymer composition. In one embodiment, the laminate includes more than one layer. An amount of fire-retardant material in the laminate containing multiple layers *(e.g.,* 4 layers) can be from 0 to 10 wt.% of the fire-retardant composition. By way of example, the laminate can include 4 to 10 wt.% (or about 6 wt.%), based on the total weight of the layer, of the fire-retardant composition that includes zinc oxide and piperazine pyrophosphate.

Examples of fibers include glass fibers, carbon fibers, aramid fibers, natural fibers, ceramic fibers, basalt fibers and/or steel fibers. Examples of natural fibers include hemp, bamboo, flax, jute and cellulose. The layer includes, based on the total weight of the layer, 50 to 80 wt.% fibers, 50 to 75 wt.%, or between any two of: 50, 55, 60, 65, 70, 75, 80 wt.% fibers. Fibers *(e.g.,* 120) of a composite (*e.g*., 100, 200, or 300) may be provided in bundles (*e.g*., bundles of carbon, ceramic, carbon precursor, ceramic precursor, glass). Such bundles may include any number of fibers, such as, for example, 400, 750, 800, 1,375, 1,000, 1,500, 3,000, 6,000, 12,000, 24,000, 50,000, 60,000, or more fibers. Fibers in a bundle can have an average filament diameter of 5, 6, 7, 8, 9, 10, 1 1, 12, 13, 14, 15, 16, 17, 18, 19, 20, 21, 22, 23, 24, 25, or more microns (*e.g*., from 5 to 30 microns, 10 to 20 microns, 12 to 15 microns, or any range there between). Fibers can be provided with a coating (*e.g*. a coating of an organic polymer, such as an organosilane), or a pigment. Fibers can also be provided as a woven mat.

Optional coupling agents can be used when fibers such as glass or carbon fibers are used. Examples of coupling agents include maleic anhydride grafted polyethylene, maleic anhydride grafted polypropylene, or a combination that includes at least one of the foregoing. The layer can include, based on the total weight of the layer, 0.1 to 2 wt.% coupling agent or greater than or substantially equal to any one of, or between any two of: 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, or 2 wt.% of coupling agent. The amount of polymer material can be adjusted when coupling agents are used.

In some embodiments, the laminate layer can optionally include additives such as antioxidants, heat stabilizers, flow modifiers, colorants, etc., or any combinations thereof. An amount of additives range from 0.01 to 0.1 wt.%, or 0.01, 0.02, 0.03, 0.04, 0.05, 0.06, 0.07, 0.08, 0.09, or 0.1 wt.% or any range or value there between. The amount of polymer material can be adjusted when coupling agents are used.

In a preferred embodiment, one laminate layer or multiple layer(s) includes, based on the total weight of the layer, 20 to 50 wt.% of polypropylene, 0 to 30 wt.% of a fire-retardant composition that includes zinc oxide and piperazine pyrophosphate, 50 to 80 wt.% of glass fibers, and 0.01 to 2 wt.% of a coupling agent. In another preferred embodiment, one layer or multiple laminate layers include, based on the total weight of the layer, at 20 to 50 wt.% of polypropylene, 4 to 30 wt.%, a fire-retardant composition that includes zinc oxide and piperazine pyrophosphate, 50 to 80 wt.% of carbon fibers, and 0.01 to 2 wt.% of a coupling agent. In yet another preferred embodiment, one layer or multiple laminate layers can include, based on the total weight of the layer, 25 to 50 wt.% of polypropylene, 50 to 75 wt.% of carbon or glass fibers, and 0.01 to 2 wt.% of a coupling agent.

Layers used to produce the laminates can be obtained from commercial sources or manufactured. By way of example, one or more of the layers can be made by dispersing fibers in a polymer matrix as described in International Application Publication No. WO 2016/142786 to Prins et al.*.* In such a method, a sheet or film that includes thermoplastic polymer and/or the fire-retardant composition can be supplied between a first and a second spreaded fiber layers. Heat can be applied to the fiber layer/polymer composition/fiber layer material, followed by pressing the fiber layers into the polymer composition. After pressing is completed, the first or second fiber layers can be rubbed. In some cases, the fibers are not spread prior to heating. The layers can alternatively be made by using known impregnation techniques. For example, Miller et al. in Polymers & Polymer Composites, 1996, Vol. 4, No. 7 describes impregnation techniques for thermoplastic matrix composites. One such method can include providing suppling fibers to one or more solution baths (*e.g*., thermoplastic polymer and/or fire retardant composition in one or two baths) to form resin impregnated fibers, drying the fibers, and then pressing the fibers to produce a layer (*e.g*., prepreg sheets). The polymer and fibers can be stacked together, heated, and then pressed causing the resin to flow transverse to the fibers to from prepreg sheets of reinforced thermoplastic materials.

Each of the layers can have a length and a width that is perpendicular to and smaller than the length, where the length and the width are each a distance between outer edges of the layer measured along a straight line. The length can be, but need not be, the largest such distance. Each of the layers can have a shape and dimensions that correspond to the shape and dimensions of laminate 104 or 106 and/or composite 100 and 200. To further illustrate, the largest face of each of the layers can have a surface area that is substantially equal to a surface area of the largest face of laminate 104 or 106. To yet further illustrate, each of the layers can be rectangular. In other embodiments, one or more layers of a laminate can have a shape and/or dimensions that differ from the shape and/or dimensions of the laminate; such layers can, for example, be used to add stiffness and strength to a portion of the laminate that is smaller than the entirety of the laminate.

Referring back to FIGS. 1B and 1C composites 100 with four layers (layers 112, 112', 114 and 114') and six layers (layer 112, 114, 116, 118, 120, and 122), respectively are depicted. At least one layer can include a thermoplastic fire-retardant polymeric matrix or a thermoplastic polymeric matrix absent the fire-retardant composition having a plurality of fibers dispersed therein. Some of the methods for producing a laminate of the present invention *(e.g.,* 104 or 106) include stacking two or more layers (*e.g*., including one or more of any layers described above in a 0/90 orientation). By way of example, at least 2 or 3, 4, 5, 6, 7, 8, 9, 10 or more layers having a thickness of about 0.1 to 10 mm, or 0.25 to 5 mm can be stacked. During such stacking, any number of the laminates can be formed by placing sections (*e.g*., layers 112 and 114) of layer material, such as, for example, sections of unidirectional fiber layers, adjacent to one another. In some methods, the two or more layers include two or more unidirectional first layer and one or more unidirectional second layer, and the stacking is performed such that: (1) fibers of the first layer are aligned in a first direction; (2) fibers of the one or more second layer are aligned in a second direction that is perpendicular to the first direction; and (3) the one or more second layers are disposed in contact with one another and between two of the first layers.

Layers *(e.g.,* 112, 112', 114, 114' 118, 120, 122, *etc.)* that include fibers *(e.g.,* fibers 124) can have a pre-consolidation fiber volume fraction (V_{f}) that is greater than or substantially equal to any one of, or between any two of: 40, 45, 50, 55, 60, 65, 70, 75, 80, 85, or 90%. In some embodiments of the present laminates, one or more layers may not include fibers so long as at least one layer contains 50 wt.% to 80 wt.% fibers; such layer without fibers can, for example, include a sheet of thermoplastic polymer material (*e.g*., polymer 126 in FIG. 1).

The laminates can be prepared using known lamination methods. It should be understood that laminates (*e.g.*, laminates 104 and 106) can be made of layers having the same or different compositions. By way of example, layer 112, layer 112', layer 114, and layer 114' can each have a different composition or layers 112, 114, 114, 116, 118, 120, and 122 can have the same or different compositions. In another example, laminate 104 can be made of multiple layers where each layer have the same composition, while laminate 106 can be made of multiple layers where each layer have a composition different than the layer that make up laminate 104.

One or all of the layers (*e.g.,* 112, 112', 114, 114', 116, 117, 118, 120, 122 *etc*.) include fibers (*e.g.,* fibers 124) dispersed within a matrix material or pressed into the polymer matrix material. By way of example, the laminates can be prepare using a double belt press with integrated contact heating and cooling supplied by, for example Meyer^{®} (Maschinenfabrik, Herber Meyer GmbH, Germany). The different layers (*e.g.*, layers 108 and 110) can enter the heat press unit in a defined stacking sequence at a rate of 1.5 m/min. The layer stack can be pressed together in a first zone at a pressure of 0.1 to 0.4 N/cm², or (1 to 4 kPa, or 1, 1.5, 2, 2.5, 3, 3.5, 4 kPa or any value or range there between) and then heated to a temperature of 170 to 185 °C, (*e.g.,* about 180 °C). The pressed stack can enter a second zone, pressed, and the heated to 190 to 200 °C (*e.g.,* about 195 °C). The pressed stack can enter a third zone, be pressed at a lower temperature of 185 to 195 °C (*e.g.,* about 190 °C) to form the laminate (*e.g*., laminate 104 and/or 106). Heating and cooling can be maintained without release of pressure. A static heated press can be used.

In laminate 104 and/or 106, each of layers (*e.g.*, layers 112, 112', 114, 114', 116, 118, 120, 122, *etc*.) can be a unidirectional layer, or a layer having fibers (*e.g.,* fibers 124), substantially all of which are aligned in a single direction. More particularly, in each of the layers, the fibers can be aligned with either the length of laminate 104/106 (*e.g.,* layers 114, 114' of FIG. 1B each of which may be characterized as a 0-degree unidirectional layer) or the width of the laminate (*e.g*., layers 112 and 112' of FIG. 1B each of which may be characterized as a 90-degree unidirectional layer). The phrase, "aligned with" means within 10 degrees of parallel. Other embodiments of the present laminates can include one or more unidirectional layers, each having fibers that are aligned in any suitable direction. For example, a unidirectional layer can include fibers aligned in a direction, where the smallest angle between the direction and a length of a laminate including layer can be greater than or substantially equal to any one of, or between any two of: 0, 5, 10, 15, 20, 25, 30, 35, 40, 45, 50, 55, 60, 65, 70, 75, 80, 85, or 90 degrees.

Some embodiments of the present laminates can includemore than one layer. The layers containing fibers can have fibers that define a woven structure (*e.g*., as in a layer having a plane, twill, satin, basket, leno, mock leno). For example, a layer can include a first set of fibers aligned in a first direction and a second set of fibers aligned in a second direction that is angularly disposed relative to the first direction, where the first set of fibers is woven with the second set of fibers. A smallest angle between first direction and second direction can be greater than or substantially equal to any one of, or between any two of: 10, 15, 20, 25, 30, 35, 40, 45, 50, 55, 60, 65, 70, 75, 80, 85, or 90 degrees. The smallest angle between first direction and a length of a laminate including such a layer can be greater than or substantially equal to any one of, or between any two of: 0, 5, 10, 15, 20, 25, 30, 35, 40, 45, 50, 55, 60, 65, 70, 75, 80, 85, or 90 degrees.

Some embodiments of the present laminate(s) can include one or more layers, each formed from sections of layer material. For example, a unidirectional layer can be formed from sections of unidirectional fiber material that has been placed adjacent to one another. To form such a layer, sections of layer material can be placed adjacent to one another manually and/or by an automated material laying machine.

Referring to FIG. 1C, 0-degree unidirectional layers and 90-degree unidirectional layers can be stacked such that the 0-degree unidirectional layers are in contact with one another (meaning each is in contact with at least one other) and are disposed between two of the 90-degree unidirectional layers. In some embodiments, laminates 104 and 106 can include first and second sub-stacks of 90-degree unidirectional layers and a third sub-stack of 0-degree unidirectional layers, where the third sub-stack is disposed between the first and second sub-stacks. In laminates 104 and 106, each of the sub-stacks can include three layers. However, in other embodiments, such sub-stacks can each be replaced with a single layer or can include 2, 3, 4, 5, 6, 7, 8, 9, or more layers. Other embodiments of the present laminates can include any suitable plies (*e.g*., including one or more of any layer described above) stacked in any suitable configuration (*e.g*., balanced, symmetric and asymmetric).

### D. Fire-Retardant Film

The fire-retardant film includes a thermoplastic polymer (third thermoplastic polymer), a fire-retardant composition, and optionally additives. In some embodiments, no additives are used. Thermoplastic polymers suitable for use in making the fire-retardant film can include thermoplastic polymers that are the same or different from the thermoplastic polymers used for the core and/or the laminates as long as it is compatible with the thermoplastic polymers used in the laminate. If the third thermoplastic polymer is not compatible materials can lead to poor physical properties (delamination) or chemical properties. Compatibility can be determined by assessing the degree of interfacial tension differences between the two polymer layers (*e.g.*, the film layer and the laminate). Interfacial tension differences can be estimated quantitatively or through trial and error. Quantitative assessment can be based on like-like through Hildebrand or Hansen Solubility parameter calculations of the two polymers to be assessed (*See,* for example, International Application Publication No. WO 2019/038640 to Gunbas et al.)*.*

Examples of the third thermoplastic polymer includes a polypropylene, polyethylene, PET, a PC, a PC copolymer, a polyimide, a PES, a poly(phenylene ether), PPO, or a poly(phenylene ether)/styrene blend, or a blend thereof. In a preferred embodiment, the layer includes polypropylene, more specifically polypropylene homopolymer. The film polypropylene can have a different molecular weight than the laminate polypropylene. In the embodiments, the film includes any range of any two of: 59 wt.%, 60 wt.%, 65 wt.%, 70 wt.%, 75 wt.%, 80 wt.%, 85 wt.%, 90 wt.% or 95 wt.% of polymer, based on the total weight of the film.

The total amount of fire-retardant composition in the fire-retardant film is 5 to 40 wt.%, preferably 15 to 30 wt.%, or between any two of: 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.7, 18, 18.5, 19, 19.5, 20, 20.5, 21, 21.5, 22, 22.5, 23, 23.5, 24, 24.5, 25, 25.5, 26, 26.5, 27, 27.5, 28, 28.5, 29, 29.5, 30, 35, 36, 37, 38, 39, or 40 wt.%. In one embodiment, the layer contains 5 to 40 wt.% of the fire-retardant composition that includes a metal oxide and a nitrogen-phosphorous compound. Examples of fire-retardant compositions are described in Section F Fire Retardant Compositions of this specification. By way of example, the fire-retardant film can include 5 to 40 wt.% (or about 20 wt.%), based on the total weight of the layer, of the fire-retardant composition that includes zinc oxide and piperazine pyrophosphate. In some embodiments, the fire-retardant laminate includes less fire-retardant composition than the fire-retardant film. For example, the fire-retardant laminate can include 4 wt.% to 10 wt.%, based on the total weight of the fire-retardant laminate and the fire retardant film can include 15 to 40 wt.%, based on the total weight of the fire-retardant film. In a preferred instance, the same fire-retardant composition is used in the fire-retardant film and the fire-retardant laminate. In another instance, the same fire-retardant composition is used in the fire-retardant film, the fire-retardant adherent and the fire-retardant laminate.

In some embodiments, fire-retardant film can include additives such as antioxidants, heat stabilizers, flow modifiers, acid scavengers, colorants, etc., or any combinations thereof. An amount of additives range from 0 to 1 wt.%, or 0, 0.01, 0.02, 0.03, 0.04, 0.05, 0.06, 0.07, 0.08, 0.09, 0.1, 0.5, or 1 wt.% or any range or value there between.

The fire-retardant film can be made using known film making methodology. For example, a composition of thermoplastic polymer, fire-retardant composition, and optional additives can be added to an extruder blending tank and extruded using a extruder (*e.g*., a twinscrew extruder) to a desired thickness. Fire-retardant films can also be obtained from commercial sources such as SABIC.

### E. Adherent Layer

In some instances, an adherent layer (tie layer) can be used between the laminate and the core. The adherent layer can include an optional third fire-retardant composition. An amount of fire retardant composition, based on the weight of the adherent layer can be 0 wt.% to 40 wt.% or greater than one of, equal to one of, or between any two of 0, 5, 10, 15, 20, 25, 30, 35, 40 wt.%. Examples of fire-retardant compositions are described in Section F Fire Retardant Compositions of this specification. The reminder of the adherent layer can be adherent material and optional additive. An amount of adherent material, based on the weight of the adherent layer, can be 60 wt.% to 100 wt.% or greater than one of, equal to one of, or between any two of 60, 65, 70, 75, 80, 85, 90, 95, 100 wt.%. Examples of adherent material can include ethylene vinyl acetate, polypropylene, polypropylene-polyethylene terephthalate blends, acrylics, nitriles, silicone rubbers, styrene-butadiene-styrene copolymers, styrene-ethylene/butylene-styrene copolymers, styrene-ethylene/propylene copolymers, styrene-isoprene-styrene copolymers, or a combination thereof. In a preferred instance, the adherent material is the same material as the fire-retardant film.

### F. Fire Retardant Compositions

Fire-retardant compositions used in the laminate, the fire-retardant film, the fire-retardant adherent layer, or a combination thereof can include or more compounds known to inhibit or delay the spread of fire and/or reduce the flammability of the composition. In a particular embodiment, the fire-retardant composition is an intumescent fire-retardant, which inhibits or delays the spread of a fire. Examples of fire-retardants include nitrogen-phosphorus compounds, phosphoric acid, metal oxides, metal phosphates organo-phosphorus compounds, nitrogen-containing polymers, talc, sulfonates or salts thereof, silica, hydrated oxides, organic polymers, nanoclays, organoclay, organic polymers, silicon-phosphorous-nitrogen compounds, and mixtures thereof. Examples of metal phosphates include calcium phosphate, and magnesium phosphate. Examples of hydrated oxides include calcium hydroxide and magnesium hydroxide. Examples of metal oxides include titanium oxide, aluminum oxide, zinc oxide, iron oxide, magnesium oxide and calcium oxide.

Examples of nitrogen-phosphorus fire-retardant compounds include a nitrogen-containing phosphate, a nitrogen-containing polyphosphate, ammonium phosphate, ammonium pyrophosphate, piperazine pyrophosphate, piperazine polyphosphate, melamine pyrophosphate, melamine orthophosphate, dimelamine orthophosphate, melamine polyphosphate, bis(melaminum) salt of pentaerythritol spirobisphosphate, or a combination thereof. The term "phosphate" refers to a salt or ester of a phosphoric acid. The term "pyrophosphate" refers to phosphate PO₄ structural units linked together by an oxygen atom. The term "polyphosphate" refers to a salt or ester of a polymeric oxyanion formed from three of more phosphate (PO₄) structural units linked together by sharing oxygen atoms. In the above compounds the term "melamine" or "piperazine" in the phosphoric acid salt compound and the polyphosphoric acid salt by N,N.N',N'-tetramethyldiaminomethane, ethylenediamine, N,N'-dimethylethylenediamine, N,N'-diethylethylenediamine, N,N-dimethylethylenediamine, N,N-diethylethylenediamine, N,N,N',N'-tetramethylethylenediamine, N,N,N',N'-diethylethylenediamine, 1,2-propanediamine, 1,3-propanediamine, tetramethylenediamine, pentamethylenediamine, hexamethylenediamine, 1,7-diaminoheptane, 1,8-diaminooctane, 1,9-diaminononane, 1,10-diaminodecane, trans-2,5-dimethylpiperazine, 1,4-bis(2-aminoethyl)piperazine, 1,4-bis(3-aminopropyl)piperazine, acetoguanamine, benzoguanamine, acrylic guanamine, 2,4-diamino-6-nonyl-1,3,5-triazine, 2,4-diamino-6-hydroxy-1,3,5-triazine, 2-amino-4,6-dihydroxy-1,3,5-triazine. 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1,3,5-triazine, 2-amino-4,6-dimercapto-1,3,5-triazine, ammeline, phthalodiguanamine, melamine cyanurate, melamine pyrophosphate, butylenediguanamine, norbornenediguanamine, methylenediguanamine, ethylenedimelamine, trimethylenedimelamine, tetramethylenedimelamine, hexamethylenedimelamine, or 1,3-hexylenedimelamine. Nitrogen-phosphorus fire-retardant compounds and/or compositions are described in U.S. Patent No. 7,803,856 to Perego et al.*,* U.S. Patent Application Publ. Nos. 2013/0248783 to Zhu et al*.,* and 2016/0244600 to Kurokawa, or can be obtained from commercial sources such as Adeka Palmarole (Japan) under the tradenames ADK STAB FP-2100JC, ADK STAB FP-2200S and ADK STAB FP-2500S. In a preferred embodiment, zinc oxide is used. Examples of nitrogen-containing polymers include poly(2,4-piperazinyl-6-morpholinyl-1,3,5-triazine), poly(2,4-piperazinyl-6-morpholinyl-1,3,5-triazine).

Examples of phosphates include trimethyl phosphate, triethyl phosphate, tributyl phosphate, tri(2-ethylhexyl) phosphate, tributoxyethyl phosphate, monoisodecyl phosphate, 2-acryloyloxyethyl phosphate, trixylenyl phosphate, tris(2-phenylphenyl) phosphate, trinaphthyl phosphate, cresyldiphenyl phosphate, xylenyldiphenyl phosphate, diphenyl-2-methacrylolyloxyethyl phosphate, resorcinol bis(diphenyl phosphate), resorcinol bis(dixylenyl phosphate), resorcinol bis(dicresyl phosphate), hydroquinone bis(dixylenyl phosphate), bisphenol A bis(diphenyl phosphate), tetrakis(2,6-dimethylphenyl) 1,3-phenylenebisphosphate, pentaerythritol phosphate alcohol, oligomeric ethyl ethylene phosphate, tricresyl phosphate, trixylenyl phosphate, isopropylphenyl phosphate, tert-butylphenyl diphenyl phosphate, 2-ethylhexyl diphenyl phosphate, isodecyl diphenyl phosphate, butyl diphenyl phosphate, dibutyl phenyl phosphate, tributyl phosphate, tetraphenyl resorcinol diphosphate, and tetraphenyl bisphenol-A diphosphate.

In one embodiment, the fire-retardant composition can include a metal oxide (*e.g.,* zinc oxide) and a nitrogen-phosphorous compound. The nitrogen-phosphorous compound can be at least one of melamine pyrophosphate, piperazine pyrophosphate, and ammonium polyphosphate.

### G. Compliance Standards

The composites of the present invention can be compliant with vehicle and/or rail transportation standards. (*e.g.*, ECE Regulation 118, Annex 7 (2005) + Rev. 2 - amendment 1 (2018) and Annex 8 (2005) + Rev. 2 - amendment 1 (2018), EN ISO 9239-1, EN 45545-2; R1, R6, R10 (HL2, HL3), TB/T (TB, TBT), NFPA 130, ASTM E662 and ASTM E162, Chinese standard TB/T or the International Union of Railways standard UIC 564).The non-structural components can meet certain criteria set forth in European Railway standard EN-45545 (2013). The European Union has approved the introduction of a set of fire testing standards for the railroad and vehicle industry that includes flammability, flame spread rate, heat release, smoke emission, and smoke toxicity requirements for materials used in railway vehicles, known as European Railway standard EN-45545 (2013). Based on the vehicle material, end-use, and fire risks, 26 different "Requirement" categories for materials have been established (R1-R26). The R1, R2, R5, R10, R11 cover, among others, interior vertical surfaces, such as side walls, front walls, end-walls, partitions, room dividers, flaps, boxes, hoods and louvres; interior doors and linings for internal and external doors; window insulations, kitchen interior surfaces, interior horizontal surfaces, such as ceiling paneling, flaps, boxes, hoods and louvres; luggage storage areas, such as overhead and vertical luggage racks, luggage containers and compartments; driver's desk applications, such as paneling and surfaces of driver's desk, interior surfaces of gangways, such as interior sides of gangway membranes (bellows) and interior linings; window frames (including sealants and gaskets), tables(folding) with downward facing surface; interior and exterior surface of air ducts, and devices for passenger information (such as information display screens). The composites, laminates, and/or layers of the present invention can meet the requirements for HL3 for R10 applications. R6, R8 and R7 cover interior surface of gangways, external body shell (wall and underframe) external exterior ducts, external design features, outer surface of water containers placed in the underframe, bogie part, air bags for pneumatic suspension, cable containment for exterior, arc splash barrier materials, parts of the drive, tires, flexible metal/rubber unit including element in bogies.

As shown in the Example section, the fire-retardant composites of the present invention pass ANNEX 7 (melting behavior of the materials) and ANNEX 8 (vertical burning behavior of the materials) of the ECE R No. 118 and flame spread test EN ISO 9239-1. The composites of the present invention have a HL1 value of 4.5 to 6, a HL2 value of higher than 6 but less than 8, and a HL3 value greater than 8. The composites of the present invention have a smoke density of Dₛ Max < 10 min of 150, and a smoke toxicity CITg Max of 0.75, according to ISO 5659-2.

ISO 9239-1:2010 specifies a method for assessing the wind-opposed burning behavior and spread of flame of horizontally mounted floorings exposed to a heat flux radiant gradient in a test chamber, when ignited with pilot flames.

The composites, laminates, and/or layers of the present invention can be used meet NFPA 130 (2010 edition) for interior applications used in the United States rail transportation vehicles. This standard imposes requirements on rate of smoke generation and surface flammability. The generation of smoke is measured *via* ASTM E662-12 smoke density test and the requirements are a preferred smoke density after 1.5 min (Ds 1.5) of 100 and less and a preferred smoke density after 4 min (Ds 4) of 200 and less, in either flaming or non-flaming mode. Surface flammability is measured *via* the ASTM E162-12a flame spread test and the requirements are a maximum flame spread index (Is) of 35 and less, and no flaming running or dripping allowed. It is calculated from multiplying the flame spread factor (Fs) and the heat evolution factor (Q) determined during the test. The railway components described herein can also meet these standards.

The following includes definitions of various terms and phrases used throughout this specification.

The terms "about" or "approximately" are defined as being close to as understood by one of ordinary skill in the art. The terms are defined to be within 10%, preferably within 5%, more preferably within 1%, and most preferably within 0.5%.

The terms "wt.%", "vol.%", or "mol.%" refers to a weight, volume, or molar percentage of a component, respectively, based on the total weight, the total volume of material, or total moles, that includes the component. In an example, 10 grams of component in 100 grams of the material is 10 wt.% of component.

The term "substantially" and its variations are defined to include ranges within 10%, within 5%, within 1%, or within 0.5%.

The terms "inhibiting" or "reducing" or "preventing" or "avoiding" or any variation of these terms, when used in the claims and/or the specification includes any measurable decrease or complete inhibition to achieve a desired result.

The term "effective," as that term is used in the specification and/or claims, means adequate to accomplish a desired, expected, or intended result.

The use of the words "a" or "an" when used in conjunction with any of the terms "comprising," "including," "containing," or "having" in the claims, or the specification, may mean "one," but it is also consistent with the meaning of "one or more," "at least one," and "one or more than one."

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The fire-retardant composites of the present invention can "comprise," "consist essentially of," or "consist of" particular ingredients, components, compositions, etc. disclosed throughout the specification. With respect to the transitional phase "consisting essentially of," in one aspect, a basic and novel characteristic of the thermoplastic fire-retardant composites of the present invention are their abilities to be compliant with respect to interior rail or vehicle transportation fire-retardant standards.

### EXAMPLES

The present invention will be described in greater detail by way of specific examples. The following examples are offered for illustrative purposes only Those of skill in the art will readily recognize a variety of noncritical parameters which can be changed or modified to yield essentially the same results.

### Example 1

### (Fire-Retardant Composites)

The fire-retardant laminate layers were made from a resin composition of polypropylene (79.8 wt.%), a nitrogen-phosphorus fire retardant (20 wt.%) and the balance being stabilizers (0.2 wt.%). The resin was formed into layers having a composition of the polypropylene (23.22 wt.%), the nitrogen-phosphorus fire retardant (5.82 wt.%), stabilizers (0.06 wt.%), glass fibers (70 wt.%) and coupling agent (0.9 wt.%). The layers were made into 4 layered laminates using a double belt press manufactured by Meyer^{®} (Maschinenfabrik, Herber Meyer GmbH, Germany). The double belt press parameters were 1.5 m/min, zone 1 temperature about 180 to 190 °C, zone 2 temperature about, 195 to 200 °C, zone 3 temperature 195 to 220 °C, pressure 0.3 N/cm² (3 kPa).

The fire-retardant laminates were consolidated with a PET foam core (15 mm, Divinylcell P; Diab Group, Sweden), a fire-retardant adhesive film positioned between the core and laminates, and a fire-retardant outer layer films. Each fire-retardant adhesive film and each fire-retardant outer layer films all having a composition of polypropylene (about 79.8 wt.%), the nitrogen-phosphorus fire retardant (20 wt.%) used in the laminate, and additives (0.2 wt.%).

The materials were consolidated using a double belt press manufactured by Meyer^{®} (Maschinenfabrik, Herber Meyer GmbH, Germany). The double belt press parameters were 1.5 m/min, zone 1 temperature about 190 °C, zone 2 temperature about, 200 °C, zone 3 temperature 210 °C, pressure 0.3 N/cm² (3 kPa) to produce composites B1, B2, and B4. The layering of the inventive samples are listed in Table 1.

### Example 2 (Non-Fire-Retardant Laminate Composite)

Fire-retardant composite sample B3 was made in the same manner as the composites of Example 1, except a non-fire-retardant (non-FR) laminate layers were obtained from a commercial source (*e.g*., SABIC-FRT). The non-FR laminates were consolidated with a PET foam core (15 mm, Divinylcell P150; Diab Group, Sweden) and a fire-retardant adhesive film positioned between the core and each laminate, and a fire-retardant outer layer film positioned on the outer surface of each laminate. Each fire-retardant adhesive film and each outer layer film had a composition of polypropylene (79.8 wt.%), the nitrogen-phosphorus fire retardant (20 wt.%), additives (0.2 wt.%).

The materials were consolidated using a double belt press manufactured by Meyer^{®} (Maschinenfabrik, Herber Meyer GmbH, Germany). The double belt press parameters were 1.5 m/min, zone 1 temperature about 190 °C, zone 2 temperature about, 200 °C, zone 3 temperature 210 °C, pressure 0.3 N/cm² (3 kPa). The layering of the inventive samples are listed in Table 1.

### Example 3 (Comparative Samples 1 and 2)

Comparative samples 1 and 2 were made in the same manner as Example 1 above, except that no fire-retardant film was used as an outer layer. The layering of the comparative samples are listed in Table 1.

**Table 1**

| Sample No. | **Sandwich Panel Composites** Description | **FR Adherent laver** | **Outer Layer** |
|---|---|---|---|
| C1 | Two 4 layer laminates; PET core | 0.5 mm FR film | No Outer Layer |
| B1 | Two 4 layer laminates, PET core | 0.5 mm FR film | 0.5 mm FR film |
| B2 | Two 4 layer laminates, PET core | 0.5 mm FR film | 1 mm FR film |
| B3 | Two 4 layer non-FR laminates, PET core | 0.5 mm FR film | 0.5 mm FR film |
| B4 | Two 4 layer laminates; PET core | 0.5 mm FR film | 0.5 mm FR film |
| C2 | Two 4 layer laminates; PET core | 0.5 mm FR film | No Outer Layer |

### Example 4 (Fire-Retardant Testing of Sandwich Panel Composites of the Present Invention)

Compliancy tests for the vehicle transportation was performed using ECE Reg. number 118 Annex 7 and Annex 8 testing, and EN45545-2, R10 flame spread performance. Table 2 lists the results of the tests. Samples B4 and C2 were tested by Currenta and Crepim fire laboratories for compliancy for EN45545-2, R10 and the test results are listed in Table 3.

**Table 2**

| Configuration | Annex 7 | Annex 8 |
|---|---|---|
| C1 | × Fail | ✔ Pass |
| B1 | ✔ Pass | ✔ Pass |
| B2 | ✔ Pass | ✔ Pass |
| B3 | ✔ Pass | ✔ Pass |

**Table 3**

| Samples | CHF | MAHRE | Dsₘₐₓ | CIT_{g} | HL |
|---|---|---|---|---|---|
| B4 | 8.8, 8 | 66, 52 | ----, 117 | -- , 0.03 | HL3, HL3 |
| C2 | 5.4, 4.2 | 78, 84 | Pen, 149 | ---, 0.03 | HL1,--- |

From the data, it was determined that the composites of the present invention passed HL3 level according EN45545-2, R10 in flame spread performance and the ECE Reg. number 118 Annex 7 and Annex 8.

## Claims

1. A fire-retardant composite comprising:
(a) a porous core material comprising a first thermoplastic polymer comprising polyethylene terephthalate, a fire-retardant polypropylene, a polycarbonate, a polyimide, a polyethersulfone, a polyurethane, or a poly(phenylene ether)/styrene blend, or a blend thereof;
(b) a first reinforced laminate disposed on a first side of the porous core, the first reinforced laminate comprising at least one layer, the layer comprising, based on the total weight of the layer:
(i) 50 wt.% to 80 wt.% fibers,
(ii) 20 wt.% to 50 wt.% of a second thermoplastic polymer comprising polypropylene, polyethylene, a polycarbonate, a polycarbonate copolymer, a polyethylene terephthalate, a polyethersulfone, a poly(phenylene) ether, poly(p-phenyl)oxide, or a polyimide, or a blend thereof; and
(iii) 0 wt.% to 30 wt.% of a first fire-retardant composition;
(c) a first fire-retardant film disposed on the outer surface of the first reinforced laminate, wherein the first fire-retardant film comprises, based on the total weight of first fire-retardant film:
(i) 59 wt. % to 95 wt. % of a third thermoplastic polymer compatible with the second thermoplastic polymer;
(ii) 5 to 40 wt.%, of a second fire-retardant composition; and
(iii) 0 to 1 wt.% additives.

2. The fire-retardant composite of claim 1, further comprising an adherent layer contacting at least a portion of the surface of the porous core material and at least a portion of the surface of at least one of the reinforced laminates.

3. The fire-retardant composite of claim 2, wherein the adherent layer comprises 0 wt.% to 30 wt.% of a third fire-retardant composition and 70 wt.% to 100 wt.% of polypropylene, ethylene vinyl acetate, polypropylene-polyethylene terephthalate blends, acrylics, nitriles, silicone rubbers, styrene-butadiene-styrene copolymers, styrene-ethylene/butylene-styrene copolymers, styrene-ethylene/propylene copolymers, styrene-isoprene-styrene copolymers, or a combination thereof.

4. The fire-retardant composite of any one of claims 1 to 3, wherein the first, second, or third fire-retardant composition comprise an intumescent fire-retardant composition.

5. The fire-retardant composite of any one of claims 1 to 4, wherein the fire-retardant composition comprises a metal oxide and a nitrogen-phosphorous compound, preferably the metal oxide is zinc oxide and the nitrogen-phosphorous compound is selected from the group consisting of melamine pyrophosphate, piperazine pyrophosphate, ammonium polyphosphate, and mixtures thereof.

6. The fire-retardant composite of claim 5, further comprising a second laminate or a support disposed on a side opposite the first side of the core.

7. The fire-retardant composite of claim 6, wherein the second laminate is the same or different than the first laminate.

8. The fire-retardant composite of any one of claim 7, further comprising a second fire-retardant film disposed on the outer surface of the second laminate, wherein the second fire-retardant film is the same or different than the first fire-retardant film.

9. The fire-retardant composite of claim 8, wherein the first fire-retardant film, the second fire-retardant film, or both have a thickness of 0.05 mm to 5 mm.

10. The fire-retardant composite of any one of claims 1 to 9, where the composite thickness is greater than 0.5 mm to 100 mm, preferably 5 mm to 80 mm, more preferably 10 mm to 50 mm.

11. The fire-retardant composite of any one of claims 1 to 10, wherein the fibers comprise glass fibers, carbon fibers, aramid fibers, ceramic fibers, basalt fibers, steel fibers, natural fibers, or combinations thereof.

12. The fire-retardant composite of any one of claims 1 to 11, wherein porous core is polyethylene terephthalate, the second and third thermoplastic polymer is polypropylene, and the fire retardant composition is zinc oxide and the nitrogen-phosphorous compound is selected from the group consisting of melamine pyrophosphate, piperazine pyrophosphate, ammonium polyphosphate, and mixtures thereof.

13. The fire-retardant composite of claim 12, wherein the fibers are glass fibers, and the laminate layer further comprises 0.01 wt.% to 2 wt.%, based on the total weight of the layer of a coupling agent.

14. The fire-retardant composite of any one of claims 2 to 12, wherein porous core is polyethylene terephthalate, the second and third thermoplastic polymer is polypropylene, the laminate and the adherent layer comprise a fire-retardant composition, and the fire retardant composition in the laminate, fire-retardant film and the adherent layer is zinc oxide and the nitrogen-phosphorous compound is selected from the group consisting of melamine pyrophosphate, piperazine pyrophosphate, ammonium polyphosphate, and mixtures thereof.

15. The fire-retardant composite of claims 1 or 14, wherein the fire-retardant composite passes ANNEX 7 and ANNEX 8 of the ECE R No. 118 and flame spread test EN ISO 9239-1.

## Patentansprüche

1. Feuerhemmender Verbundwerkstoff, umfassend:
(a) ein poröses Kernmaterial, umfassend ein erstes thermoplastisches Polymer, umfassend Polyethylenterephthalat, ein feuerhemmendes Polypropylen, ein Polycarbonat, ein Polyimid, ein Polyethersulfon, ein Polyurethan oder ein Poly(phenylenether)/styrol-Gemisch oder ein Gemisch davon;
(b) ein erstes verstärktes Laminat, das auf einer ersten Seite des porösen Kerns angeordnet ist, wobei das erste verstärkte Laminat mindestens eine Schicht umfasst, wobei die Schicht, basierend auf dem Gesamtgewicht der Schicht, Folgendes umfasst:
(i) 50 Gew.-% bis 80 Gew.-% Fasern,
(ii) 20 Gew.-% bis 50 Gew.-% eines zweiten thermoplastischen Polymers, umfassend Polypropylen, Polyethylen, ein Polycarbonat, ein Polycarbonat-Copolymer, ein Polyethylen-Terephthalat, ein Polyethersulfon, ein Poly(phenylen)ether, Poly(p-phenyl)oxid oder ein Polyimid oder ein Gemisch davon; und
(iii) 0 Gew.-% bis 30 Gew.-% einer ersten feuerhemmenden Zusammensetzung;
(c) eine erste feuerhemmende Folie, die auf der Außenfläche des ersten verstärkten Laminats angeordnet ist, wobei die erste feuerhemmende Folie basierend auf dem Gesamtgewicht der ersten feuerhemmenden Folie Folgendes umfasst:
(i) 59 Gew.-% bis 95 Gew.-% eines dritten thermoplastischen Polymers, das mit dem zweiten thermoplastischen Polymer kompatibel ist;
(ii) 5 bis 40 Gew.-% einer zweiten feuerhemmenden Zusammensetzung; und
(iii) 0 bis 1 Gew.-% Zusatzstoffe.

2. Feuerhemmender Verbundwerkstoff nach Anspruch 1, ferner umfassend eine Haftschicht, die mindestens einen Abschnitt der Oberfläche des porösen Kernmaterials und mindestens einen Abschnitt der Oberfläche von mindestens einem der verstärkten Laminate kontaktiert.

3. Feuerhemmender Verbundwerkstoff nach Anspruch 2, wobei die Haftschicht 0 Gew.-% bis 30 Gew.-% einer dritten feuerhemmenden Zusammensetzung und 70 Gew.-% bis 100 Gew.-% Polypropylen, Ethylenvinylacetat, Polypropylen-Polyethylen-Terephthalat-Gemische, Acryle, Nitrile, Silikonkautschuke, Styrol-Butadien-Styrol-Copolymere, Styrol-Ethylen/Butylen-Styrol-Copolymere, Styrol-Ethylen/Propylen-Copolymere, Styrol-Isopren-Styrol-Copolymer oder eine Kombination davon umfasst.

4. Feuerhemmender Verbundwerkstoff nach einem der Ansprüche 1 bis 3, wobei die erste, zweite oder dritte feuerhemmende Zusammensetzung eine intumeszierende feuerhemmende Zusammensetzung umfassen.

5. Feuerhemmender Verbundwerkstoff nach einem der Ansprüche 1 bis 4, wobei die feuerhemmende Zusammensetzung ein Metalloxid und eine Stickstoff-Phosphor-Verbindung umfasst, wobei bevorzugt das Metalloxid Zinkoxid ist und die Stickstoff-Phosphor-Verbindung ausgewählt ist aus der Gruppe bestehend aus Melaminpyrophosphat, Piperazinpyrophosphat, Ammoniumpolyphosphat und Gemischen davon.

6. Feuerhemmender Verbundwerkstoff nach Anspruch 5, ferner umfassend ein zweites Laminat oder einen Träger, der auf einer Seite angeordnet ist, die gegenüber der ersten Seite des Kerns ist.

7. Feuerhemmender Verbundwerkstoff nach Anspruch 6, wobei das zweite Laminat gleich wie oder anders als das erste Laminat ist.

8. Feuerhemmender Verbundwerkstoff nach einem aus Anspruch 7, ferner umfassend eine zweite feuerhemmende Folie, die auf der Außenfläche des zweiten Laminats angeordnet ist, wobei die zweite feuerhemmende Folie gleich wie oder anders als die erste feuerhemmende Folie ist.

9. Feuerhemmender Verbundwerkstoff nach Anspruch 8, wobei die erste feuerhemmende Folie, die zweite feuerhemmende Folie oder beide eine Dicke von 0,05 mm bis 5 mm aufweisen.

10. Feuerhemmender Verbundwerkstoff nach einem der Ansprüche 1 bis 9, wobei die Dicke des Verbundwerkstoffs größer als 0,5 mm bis 100 mm ist, bevorzugt 5 mm bis 80 mm, bevorzugter 10 mm bis 50 mm.

11. Feuerhemmender Verbundwerkstoff nach einem der Ansprüche 1 bis 10, wobei die Fasern Glasfasern, Kohlefasern, Aramidfasern, Keramikfasern, Basaltfasern, Stahlfasern, Naturfasern oder Kombinationen davon umfassen.

12. Feuerhemmender Verbundwerkstoff nach einem der Ansprüche 1 bis 11, wobei poröser Kern Polyethylenterephthalat ist, das zweite und dritte thermoplastische Polymer Polypropylen ist und die feuerhemmende Zusammensetzung Zinkoxid ist, und die Stickstoff-Phosphor-Verbindung ausgewählt ist aus der Gruppe bestehend aus Melaminpyrophosphat, Piperazinpyrophosphat, Ammoniumpolyphosphat und Gemischen davon.

13. Feuerhemmender Verbundwerkstoff nach Anspruch 12, wobei die Fasern Glasfasern sind und die Laminatschicht ferner 0,01 Gew.-% bis 2 Gew.-% umfasst, basierend auf dem Gesamtgewicht der Schicht eines Haftvermittlers.

14. Feuerhemmender Verbundwerkstoff nach einem der Ansprüche 2 bis 12, wobei poröser Kern Polyethylenterephthalat ist, das zweite und dritte thermoplastische Polymer Polypropylen ist, das Laminat und die Haftschicht eine feuerhemmende Zusammensetzung umfassen, und die feuerhemmende Zusammensetzung im Laminat, die feuerhemmende Folie und die Haftschicht Zinkoxid ist, und die Stickstoff-Phosphor-Verbindung ausgewählt ist aus der Gruppe bestehend aus Melaminpyrophosphat, Piperazinpyrophosphat, Ammoniumpolyphosphat und Gemischen davon.

15. Feuerhemmender Verbundwerkstoff nach Ansprüchen 1 oder 14, wobei der feuerhemmende Verbundwerkstoff ANLAGE 7 und ANLAGE 8 von ECE R 118 und Flammenausbreitungsprüfung EN ISO 9239-1 besteht.

## Revendications

1. Composite ignifuge, comprenant :
(a) un matériau d'âme poreuse comprenant un premier polymère thermoplastique comprenant du polyéthylène téréphtalate, un polypropylène ignifuge, un polycarbonate, un polyimide, une polyéthersulfone, un polyuréthane, ou un mélange poly(éther de phénylène)/styrène, ou un mélange de ceux-ci ;
(b) un premier stratifié renforcé disposé sur un premier côté de l'âme poreuse, le premier stratifié renforcé comprenant au moins une couche, la couche comprenant, sur la base du poids total de la couche :
(i) 50 % en poids à 80 % en poids de fibres,
(ii) 20 % en poids à 50 % en poids d'un deuxième polymère thermoplastique comprenant du polypropylène, du polyéthylène, un polycarbonate, un copolymère de polycarbonate, un polyéthylène téréphtalate, une polyéthersulfone, un poly(éther de phénylène), poly(p-phényl)oxyde, ou un polyimide, ou un mélange de ceux-ci ; et
(iii) 0 % en poids à 30 % en poids d'une première composition ignifuge ;
(c) un premier film ignifuge disposé sur la surface extérieure du premier stratifié renforcé, dans lequel le premier film ignifuge comprend, sur la base du poids total de premier film ignifuge :
(i) 59 % en poids à 95 % en poids d'un troisième polymère thermoplastique compatible avec le deuxième polymère thermoplastique ;
(ii) 5 à 40 % en poids d'une deuxième composition ignifuge ; et
(iii) 0 à 1 % en poids d'additifs.

2. Composite ignifuge selon la revendication 1, comprenant en outre une couche adhésive entrant en contact avec au moins une partie de la surface du matériau d'âme poreuse et au moins une partie de la surface d'au moins un des stratifiés renforcés.

3. Composite ignifuge selon la revendication 2, dans lequel la couche adhésive comprend 0 % en poids à 30 % en poids d'une troisième composition ignifuge et 70 % en poids à 100 % en poids de : polypropylène, éthylène-acétate de vinyle, mélanges de polypropylène-polyéthylène téréphtalate, acryliques, nitriles, caoutchoucs de silicone, copolymères styrène-butadiène-styrène, copolymères styrène-éthylène/butylène-styrène, copolymères styrène-éthylène/propylène, copolymères styrène-isoprène-styrène, ou une association de ceux-ci.

4. Composite ignifuge selon l'une quelconque des revendications 1 à 3, dans lequel la première, deuxième, ou troisième composition ignifuge comprend une composition ignifuge intumescente.

5. Composite ignifuge selon l'une quelconque des revendications 1 à 4, dans lequel la composition ignifuge comprend un oxyde de métal et un composé azote-phosphore, de préférence l'oxyde de métal est un oxyde de zinc et le composé azote-phosphore est sélectionné parmi le groupe constitué de : pyrophosphate de mélamine, pyrophosphate de pipérazine, polyphosphate d'ammonium, et mélanges de ceux-ci.

6. Composite ignifuge selon la revendication 5, comprenant en outre un second stratifié ou un support disposé sur un côté opposé au premier côté de l'âme.

7. Composite ignifuge selon la revendication 6, dans lequel le second stratifié est le même que le premier stratifié ou différent de ce dernier.

8. Composite ignifuge selon l'une quelconque de la revendication 7, comprenant en outre un second film ignifuge disposé sur la surface extérieure du second stratifié, dans lequel le second film ignifuge est le même que le premier film ignifuge ou différent de ce dernier.

9. Composite ignifuge selon la revendication 8, dans lequel le premier film ignifuge, le second film ignifuge, ou les deux ont une épaisseur de 0,05 mm à 5 mm.

10. Composite ignifuge selon l'une quelconque des revendications 1 à 9, où l'épaisseur de composite est supérieure à 0,5 mm à 100 mm, de préférence 5 mm à 80 mm, mieux encore 10 mm à 50 mm.

11. Composite ignifuge selon l'une quelconque des revendications 1 à 10, dans lequel les fibres comprennent des fibres de verre, fibres de carbone, fibres d'aramide, fibres de céramique, fibres de basalte, fibres d'acier, fibres naturelles, ou des associations de celles-ci.

12. Composite ignifuge selon l'une quelconque des revendications 1 à 11, dans lequel âme poreuse est du polyéthylène téréphtalate, les deuxième et troisième polymères thermoplastiques sont du polypropylène, et la composition ignifuge est de l'oxyde de zinc et le composé azote-phosphore est sélectionné parmi le groupe constitué de : pyrophosphate de mélamine, pyrophosphate de pipérazine, polyphosphate d'ammonium, et mélanges de ceux-ci.

13. Composite ignifuge selon la revendication 12, dans lequel les fibres sont des fibres de verre, et la couche de stratifié comprend en outre 0,01 % en poids à 2 % en poids, sur la base du poids total de la couche, d'un agent de couplage.

14. Composite ignifuge selon l'une quelconque des revendications 2 à 12, dans lequel l'âme poreuse est du polyéthylène téréphtalate, les deuxième et troisième polymères thermoplastiques sont du polypropylène, le stratifié et la couche adhésive comprennent une composition ignifuge, et la composition ignifuge dans le stratifié, le film ignifuge et la couche adhésive est de l'oxyde de zinc et le composé azote-phosphore est sélectionné parmi le groupe constitué de : pyrophosphate de mélamine, pyrophosphate de pipérazine, polyphosphate d'ammonium, et mélanges de ceux-ci.

15. Composite ignifuge selon la revendication 1 ou 14, dans lequel le composite ignifuge satisfait à ANNEXE 7 et ANNEXE 8 de ECE R n° 118 et à l'essai de propagation de flamme EN ISO 9239-1.
